# EUROPEAN PATENT APPLICATION

(11) **EP 2 048 560 A1**
(43) Date of publication of application: **15.04.2009**
(21) Application number: 07790810.1
(22) Date of filing: 13.07.2007
(51) Int. Cl.: G05B 19/418, B61B 13/00, B65G 1/00

(54) **WORK CONVEYANCE FACILITY SYSTEM BY AUTOMATED GUIDED VEHICLE AND WORK MOUNTING TRUCK**

(30) Priority: 14.07.2006 JP 2006194378
(71) Applicant: Yazaki Kako Corporation, Shizuoka-shi, Shizuoka 422-8519 (JP)
(72) Inventor: NISHIMURA, Kenichi, Bibai-shi Hokkaido 072-0007 (JP); TERADA, Yoshihiro, Shizuoka-shi Shizuoka 422-8519 (JP); MATSUDA, Hirofumi, Takatsuki- shi Osaka 569-0034 (JP); FUKUSHIMA, Hirohisa, Shizuoka-shi Shizuoka 422-8519 (JP)
(74) Representative: Maury, Richard Philip
(86) International application number: PCT/JP2007/064030
(87) International publication number: WO 2008/007789

(57) **Abstract**

A conveyance facility system for transporting an appropriate amount of work at a time at an appropriate time to the consumption side area by automatically controlling through a computer control system an automated guided vehicle for allowing a truck that has mounted the work in the supply side area to travel accompanying the vehicle from the supply side area to the consumption side area along the guidance course of the automated guided vehicle, and allowing the empty truck that has unloaded the work in the consumption side area to return to the supply side area. The work conveyance facility system comprises a plurality of work mounting trucks (2) for loading and conveying work, an automated guided vehicle (3) for allowing the work mounting truck (2) to travel accompanying the vehicle to a set position and releasing the truck thereat, and a guidance course of the automated guided vehicle (3). The guidance course is constituted of a supply side line (4) for loading the work onto the work mounting truck (2) in the supply area (1) and driving the truck, a consumption side line (6) for leading in the work mounting truck (2) and driving the empty work mounting truck (2') that has unloaded the work in the consumption area (5), and a buffer line (7) for coupling the supply side line (4) with the consumption side line (6).

## Description

### BACKGROUND OF THE INVENTION

### Field of the Invention

This invention belongs to the technical field of transportation systems in which, in order to transport workpieces (parts of mechanical devices, half-finished products, etc.) to a consumption-side (use-side) area at appropriate times in appropriate amounts, a computer control system automatically controls automated transport vehicles designed to cause a workpiece carrier that has been loaded with workpieces in a supply-side area to travel with it from the supply-side area to the consumption-side (use-side) area, along a guideway for the automated transport vehicle, and bring a workpiece carrier that has been emptied by unloading workpieces in the consumption-side (use-side) area (empty carrier) back to the supply-side area. More specifically, this invention relates to a workpiece transportation system which can be adapted to changes in workpiece transportation line, easily, without trouble, and which causes a homeward automated transport vehicle to bring workpiece carriers that have been emptied by unloading workpieces (empty carriers) back to a supply-side area, successively, thereby enabling efficient circulation of the workpiece carriers.

### Description of the Related Art

There are already publicly known and put into practice a variety of transportation systems in which, in order to transport workpieces to a consumption-side (use-side) area at appropriate times in appropriate amounts, a computer control system automatically controls automated transport vehicles designed to travel along a guideway and workpiece carriers designed to be caused by the automated transport vehicle to travel with it (drawn or pushed from behind by the automated transport vehicle).

For example, transportation equipment disclosed in Japanese Examined Patent Publication No. Hei 1-39390 (hereinafter referred to as Patent Document 1) attracts attention for its arrangement that a storage line is provided halfway in a transport guideway connecting a workpiece-supply-side area and a workpiece-consumption-side (use-side) area so as to enable efficient use of automated transport vehicles.

Further an automated transport vehicle designed to go under the platform of a wheeled platform with free wheels (workpiece carrier), detect a guide signal emitted from a guide means laid on a travel road surface (floor surface) and cause the wheeled platform to travel with it along the guide means is also disclosed in Japanese Patent No. 3482463 (hereinafter referred to as Patent Document 2) owned by the applicant of the present patent application, and therefore publicly known.

The transportation equipment disclosed in Patent Document 1 is worthy of attention in that a workpiece-supply-side line and a workpiece-consumption-side (use-side) line are connected by a storage line disposed between them to allow so-called workpiece carriers to be temporarily stored (wait), thereby increasing the operation efficiency of automated transport vehicles operating on the supply-side line and consumption-side line.

This transportation equipment is however a so-called one-way structure allowing workpiece carriers only to move from the supply-side line to the consumption-side line, and a circulation means for bringing those workpiece carriers which have moved along the consumption-side line to the consumption-side area and have been emptied by consuming or unloading workpieces (empty carriers) back to the supply-side line is not disclosed, or possibly not provided. In this sense, the transportation equipment disclosed is imperfect and insufficient.

Further, in this transportation equipment, route switch means are provided to connect the supply-side line and the consumption-side line with the storage line. When a workpiece carrier pushed from behind by an automated transport vehicle to travel along the supply-side line reaches a storage-line entry position, the route switch means is changed in position, thereby allowing only the workpiece carrier to enter the storage line. Then, the route switch means is changed back to the original position, thereby allowing the automated transport vehicle designed to push a carrier from behind, to go straight along the supply-side line. The workpiece carrier that has entered the storage line in the above-described manner is moved forward on the storage line by another propulsion means provided.

While stored, workpiece carriers that have entered the storage line in the above-described manner are moved forward serially in a so-called chain state. A route switch means is also provided at the joint between the storage line and the consumption-side line, and when the row of the workpiece carriers reaches the storage-line exit, the first one in the row located at the exist is forced out by a propulsion means. The workpiece carrier forced out from the storage line in this manner is allowed by the route switch means to transfer onto the consumption-side line, connects with a drawing-type automated transport vehicle that has been waiting on the consumption-side line, and is drawn to move along the consumption-side line to deliver workpieces for consumption.

As stated above, in the workpiece transportation system disclosed in Patent Document 1, route switch means are provided at the joint between the supply-side line and the storage line and at the joint between the consumption-side line and the storage line, and it is necessary to cause the switching action of the route switch means in a manner synchronized with the movement of workpiece carriers. Further, a propulsion means for serially moving forward the workpiece carriers that have entered the storage line from the supply-side line, and a propulsion means for forcing a workpiece carrier from the storage line onto the consumption-side line are required. Creation of control programs for such parts is extremely troublesome, and the need of the route switch means results in a complicated line structure.

Thus, when changes are made to a factory production line adopting this transportation equipment, the adaptation of the transport guideway and control programs to the changed production line is extremely troublesome and cannot be carried out quickly and easily.

### SUMMARY OF THE INVENTION

The primary object of the present invention is to provide a workpiece transportation system wherein a supply-side line and a consumption-side line is connected by a buffer line in a simple structure, the buffer line including an outward line section corresponding to the above-mentioned storage line on which workpiece carriers that have been loaded with workpieces in a supply-side area and traveled along the supply-side line temporarily wait, and a homeward line section on which workpiece carriers that have been emptied by consuming or unloading workpieces in a consumption-side area and brought back along the consumption-side line (empty carriers) temporarily wait; and wherein the need of at least such route switch means and propulsion means as in the prior art is obviated and all the actions can be carried out by the automated function of automated transport vehicles, so that control programs required are easy to create, change of a guideway can be carried out in large part by standardized work, and adaptation to change of a factory production line or the like can be carried out easily and quickly.

Another object of the present invention is to provide a workpiece transportation system in which carriers that have been emptied by unloading workpieces are successively brought back to the supply-side area by a homeward automated transport vehicle, thereby enabling efficient circulation of carriers.

### SUMMARY OF THE INVENTION

In order to achieve the above objects, the present invention provides a workpiece transportation system comprising a plurality of workpiece carriers designed to transport workpieces loaded thereon, automated transport vehicles designed to cause the workpiece carrier to travel with it and put and detach the workpiece carrier in a predetermined position on a route, and a guideway for the automated transport vehicle, said guideway including a supply-side line provided for loading of workpieces onto the workpiece carrier in a supply area and traveling of the workpiece-loaded workpiece carrier, a consumption-side line provided for introduction of the workpiece-loaded workpiece carrier and traveling of the workpiece carrier that has been emptied by unloading the workpieces in a consumption area, and a buffer line which connects the supply-side line and the consumption-side line, wherein
the buffer line includes an outward line section onto which workpiece-loaded workpiece carriers come from the supply-side line and form a row, and a homeward line section onto which workpiece carriers that have been emptied by unloading workpieces in the consumption area come from the consumption-side line and form a row, where the outward line section and the homeward line section are almost parallel and the disposition of the entry and exit of the outward line section is opposite to the disposition of the entry and exit of the homeward line section so that the outward line section and the homeward line section form a continuous route connected with the supply-side line and the consumption-side line,
said automated transport vehicles include an automated transport vehicle provided to cause a workpiece carrier that has been loaded with workpieces in the supply area to travel with it along the supply-side line, and when the workpiece-loaded workpiece carrier passes through the entry of the outward line section of the buffer line and moves forward on the outward line section up to a fixed position, leave the workpiece-loaded workpiece carrier in that position, move backward, exit the outward line section, move toward the homeward line section, enter the homeward line section through the exit thereof, and then cause an empty workpiece carrier first encountered on the homeward line section to travel with it back onto the supply-side line, and
an automated transport vehicle provided to cause a workpiece carrier that has been emptied by unloading workpieces in the consumption area to travel with it along the consumption-side line, and when the empty workpiece cairrier passes through the entry of the homeward line section of the buffer line and moves forward on the homeward line section up to a fixed position, leave the empty workpiece carrier in that position, move backward, exit the homeward line section, move toward the outward line section, enter the outward line section through the exit thereof, and then cause a workpiece-loaded workpiece carrier first encountered on the outward line section to travel with it back onto the consumption-side line, thereby delivering the workpieces for consumption.

In one aspect of the present invention, when the workpiece carrier caused by the automated transport vehicle to travel with it passes through the entry of the outward line section or the homeward line section of the buffer line and moves forward a distance equal to the overall length of the workpiece carrier, the automated transport vehicle leaves the workpiece carrier in the position reached, and
when the automated transport vehicle passes through the exit of the outward line section or the homeward line section of the buffer line, moves forward and recognizes an encounter with a first workpiece carrier, the automated transport vehicle connects with said first workpiece carrier and causes said first workpiece carrier to travel with it.

In one aspect of the present invention, a feed-specific automated transport vehicle is provided at least on the outward line section of the buffer line to always return and wait in a fixed position on the outward line section, and under control of a control device, said feed-specific automated transport vehicle moves forward the workpiece carriers that have entered the outward line section, up to a predetermined position, one workpiece carrier at a time or a series of workpiece carriers within its transport capacity at a time, and causes the workpiece carriers to wait in that position.

In one aspect of the present invention, the workpiece carrier includes, under a platform, a gate-like structure allowing front-to-back passage, viewed along the travel direction, said gate-like structure defines a transport-vehicle passage space which allows the automated transport vehicle to come under the platform, connect with the workpiece carrier and cause the workpiece carrier to travel with it, and also to pass under the platform after disconnecting the workpiece carrier, and the automated transport vehicle has a connection means capable of connecting with a connection member of the worpiece carrier, thereby enabling the workpiece carrier to travel with the automated transport vehicle, and disconnecting the connection member, thereby enabling the automated transport vehicle to leave the workpiece carrier.

In the workpiece transportation system according to the present invention, the structure of the guideway for the automated transport vehicle in which the supply-side line and the consumption-side line are connected by the buffer line disposed between them is extremely simple, and such route switch means and propulsion means as in the prior art are not required. All the actions relating to the circulation of the workpiece carriers can be carried out by the automatic operation function of the automated transport vehicle in a simple and plain manner. Thus, automatic control programs are easy to create and change, and replacement and change of the guideway can be carried out in large part by standardized work, and therefore adaptation to replacement or change of a factory production line or the like can be carried out easily and quickly, and improved usability is provided.

Further, the present invention is arranged such that carriers that have been emptied by unloading workpieces are successively brought back to the supply-side area by the homeward automated transport vehicle, thereby enabling efficient circulation of carriers. This results in a high operation efficiency of the autoimated transport vehicles and workpiece carriers, and enables total automation without difficulty.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
FIG. 1 is a conceptual diagram showing the plane configuration of an embodiment of a workpiece transportation system according to the present invention,
FIG. 2 is a plan view showing a buffer line constituting the workpiece transportation system,
FIG. 3 is a side view showing an example of an automated transport vehicle used in the workpiece transportation system,
FIG. 4 is a side view showing how the automated transport vehicle causes a workpiece carrier to travel with it,
FIG. 5 is a front view showing how the automated transport vehicle causes the workpiece carrier to travel with it, and
FIG. 6 is a conceptual diagram showing the plane configuration of another embodiment of the workpiece transportation system.

### DETAILED DESCRIPTION OF THE PREFERRED EMBODIMENTS

A workpiece transportation system comprises a plurality of workpiece carriers 2 designed to transport workpieces loaded thereon, automated transport vehicles 3 designed to cause the workpiece carrier 2 to travel with it and put and detach the workpiece carrier 2 in a predetermined position 8 or 12 on a route, and a guideway for the automated transport vehicle 3.

The automated-transport-vehicle guideway comprises a supply-side line 4 provided for loading of workpieces onto the workpiece carrier 2 in a supply area 1 and traveling of the workpiece-loaded workpiece carrier 2, a consumption-side line 6 for introduction of the workpiece-loaded workpiece carrier 2 and traveling and sending-out of the workpiece carrier 2' that has been emptied by unloading the workpieces in a consumption area 5, and a buffer line 7 which continuously connects the supply-side line 4 and the consumption-side line 6.

The buffer line 7 includes an outward line section 7A onto which workpiece-loaded workpiece carriers 2 come from the supply-side line 4 and form a row, and a homeward line section 7B onto which workpiece carriers 2' that have been emptied by unloading workpieces in the consumption area 5 come from the consumption-side line 6 and form a row, where the outward line section 7A and the homeward line section 7B are almost parallel and the disposition of the entry 7a-1 and exit 7a-2 of the outward line section 7A is opposite to the disposition of the entry 7b-1 of and exit 7b-2 of the homeward line section 7B so that the outward line section 7A and the homeward line section 7B form a continuous route connected with the supply-side line 4 and the consumption-side line 6.

An automated transport vehicle 3 causes a workpiece carrier 2 that has been loaded with workpieces in the supply area 1 to travel with it along the supply-side line 4, and when this workpiece-loaded workpiece carrier 2 passes through the entry 7a-1 of the outward line section 7A of the buffer line 7 and moves forward on the outward line section 7A up to a fixed position 8, leaves the workpiece-loaded workpiece carrier 2 in that position 8, moves backward, exits the outward line section 7A, moves toward the homeward line section 7B, enters the homeward line section 7B through the exit 7b-2 thereof, and then causes an empty workpiece carrier 2' first encountered on the homeward line section 7B to travel with it back onto the supply-side line 4.

Meanwhile, another automated transport vehicle 3 causes a workpiece carrier 2' that has been emptied by unloading workpieces in the consumption area 5 to travel with it along the consumption-side line 4, and when this empty workpiece carrier 2' passes through the entry 7b-1 of the homeward line section 7B of the buffer line 7 and moves forward on the homeward line section 7B up to a fixed position 12, leaves the empty workpiece carrier 2' in that position 12, moves backward, exits the homeward line section 7B, moves toward the outward line section 7A, enters the outward line section 7A through the exit 7a-2 thereof, and then causes a workpiece-loaded workpiece carrier 2 first encountered on the outward line section 7A to travel with it back onto the consumption-side line, thereby delivering the workpieces for consumption.

At least on the outward line section 7A of the buffer line 7, there is disposed a feed-specific automated transport vehicle 40 to always return and wait in a fixed position 41 on the outward line section 7A. Under control of a control means 42, the feed-specific automated transport vehicle 40 moves forward the workpiece carriers 2 that have entered the outward line section 7A, up to a predetermined position 19, one workpiece carrier 2 at a time or a series of workpiece carriers 2 within its transport capacity at a time, and causes the workpiece carriers 2 to wait in that position.

### Embodiment 1

Next, the present invention will be explained on the basis of embodiments shown in the drawings.

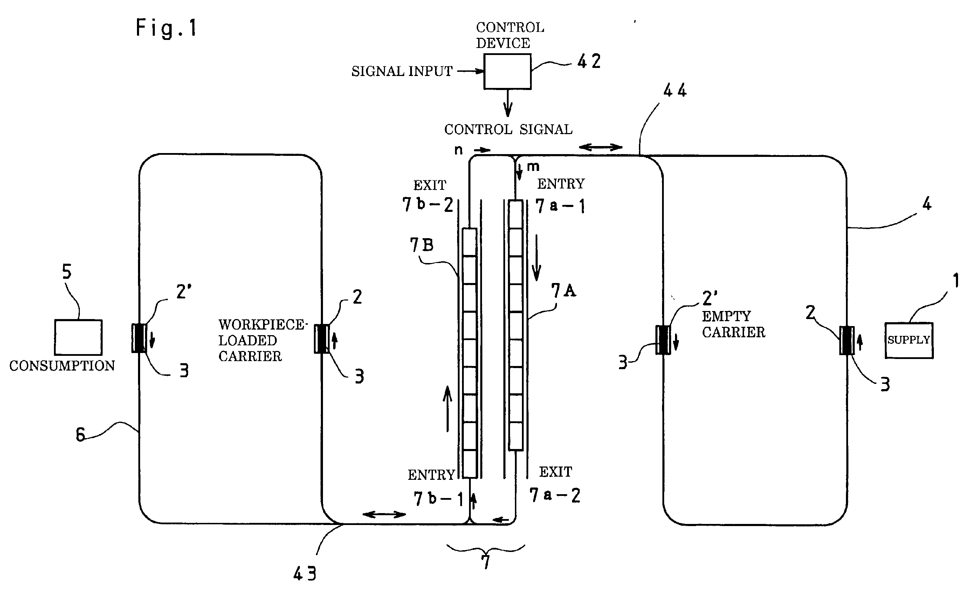

First, FIG. 1 is a conceptual diagram showing the plane configuration of a workpiece transportation system comprising automated transport vehicles 3 and workpiece carriers 2, as an embodiment of the present invention. A control device 42 denoted by reference sign 42 supervises and controls the overall system. Specifically, a variety of position detection signals etc. are fed to the control device 42, which processes them according to programs and feeds resulting control signals mostly to automated transport vehicles 3.

The workpiece transportation system shown in FIG. 1 comprises, as major elements, workpiece carriers 2 designed to be loaded with workpieces in a supply area 1 and transport them, automated transport vehicles 3 designed to cause the workpiece carrier 2 to travel with it and put and detach the workpiece carrier 2 in a predetermined position on a route, and a guideway for the automated transport vehicles 3.

The automated-transport-vehicle guideway comprises a supply-side line 4 provided for loading of workpieces onto the workpiece carrier 2 in a supply area 1 and traveling of the workpiece-loaded workpiece carrier 2, a consumption-side line 6 for traveling of the workpiece carrier 2' that has been emptied by unloading the workpieces in a consumption area 5, and a buffer line 7 disposed between the supply-side line 4 and the consumption-side line 6 to continuously connect the lines 4 and 6.

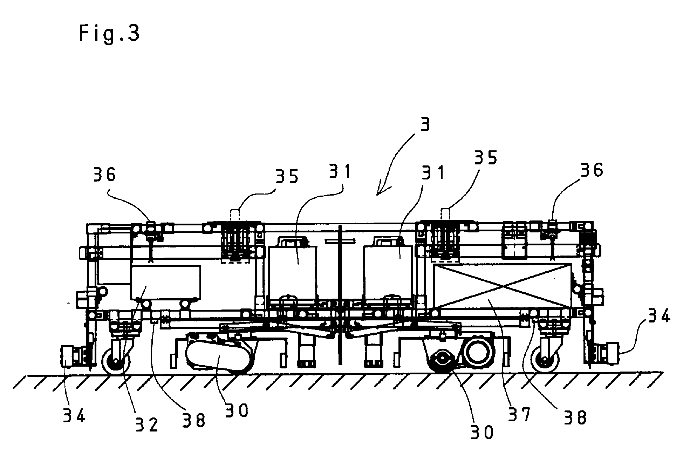

Specifically, as disclosed in the above-mentioned Patent Document 2, the automated-transport-vehicle guideway 4, 6, 7 consists of a guide means such as electromagnetic tape attached to the travel road surface or electric wire embedded in the travel road, and the automated transport vehicle 3, whose structure will be described later, carries out unmanned traveling along the guide means by detecting a guide signal emitted from the guide means, with sensors 34 (FIG. 3) provided at the front and back thereof.

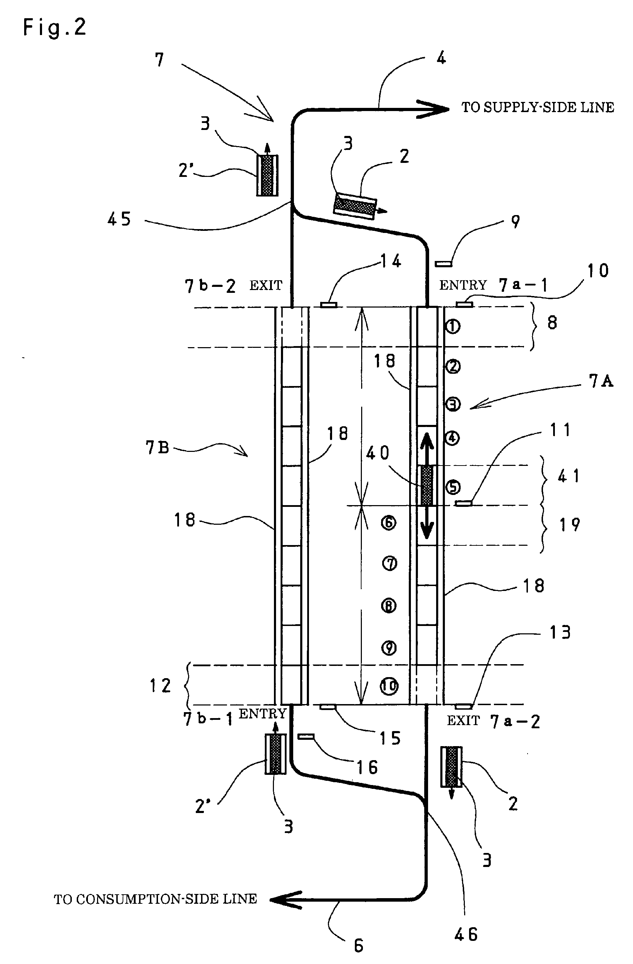

The detailed configuration of the buffer line 7 is as exemplified in FIG. 2. Specifically the buffer line 7 includes an outward line section 7A onto which workpiece-loaded workpiece carriers 2 come from the supply-side line 4 and form a row, and a homeward line section 7B onto which workpiece carriers 2' that have been emptied by unloading workpieces in the consumption area 5 come from the consumption-side line 6 and form a row, where the outward line section 7A and the homeward line section 7B are almost parallel and the disposition of the entry 7a-1 and exit 7a-2 of the outward line section 7A is opposite to the disposition of the entry 7b-1 and exit 7b-2 of the homeward line section 7B so that the outward line section 7A and the homeward line section 7B form a continuous route connected with the supply-side line 4 and the consumption-side line 6.

Thus, an automated transport vehicle 3 and a workpiece-loaded workpiece carrier 2 caused to travel with it move along the supply-side line 4 and first enter the outward line section 7A through the entry 7a-1. They move forward on the outward line section 7A up to a fixed position 8, and then the automated transport vehicle 3 leaves the workpiece-loaded carrier 2 in that position 8 and moves backward on the outward line section 7A by itself. Then the automated transport vehicle 3 performs a series of actions consisting of entering the homeward line section 7B through the exit 7b-2, connecting with an empty carrier 2' first encountered on the homeward line section 7B, and causing the empty carrier 2' to travel with it back onto the supply-side line 4.

Likewise, an automated transport vehicle 3 and an empty workpiece carrier 2' caused to travel with it move along the consumption-side line 6 and first enter the homeward line section 7B through the entry 7b-1. They move forward on the homeward line section 7B up to a fixed position 12, and then the automated transport vehicle 3 leaves the empty carrier 2' in that position 12 and moves backward on the homeward line section 7B by itself. Then the automated transport vehicle 3 performs a series of actions consisting of entering the outward line section 7A through the exit 7a-2, connecting with a workpiece-loaded workpiece carrier 2 first encountered on the outward line section 7A, and causing the workpiece-loaded workpiece carrier 2 to travel with it back onto the consumption-side line 6.

In the system according to the present invention, particularly the following actions are carried out:

The automated transport vehicle 3 which has been causing a workpiece carrier 2 that had been loaded with workpieces in the supply area 1 to travel with it along the supply-side line 4 first moves toward the outward line section 7A of the buffer line 7. An NS sensor 38 (see FIG. 3) provided on the automated transport vehicle 3 detects a command tape 9 on the route, and a detection signal is sent to the control device 42 (FIG. 1) wirelessly, so that the control device 42 recognizes the entry of the workpiece-loaded workpiece carrier 2 from the supply-side line 4 into the buffer line 7. The automated transport vehicle 3 moves forward, and when a detection signal based on the detection of a command tape 10 at the entry 7a-1 of the outward line section 7A is sent to the control device 42 (FIG. 1), a feedback signal is returned from the control device 42 to a controller 32 (see FIG. 3) of the automated transport vehicle 3. On receipt of the feedback signal, the automated transport vehicle 3 moves forward a distance equal to the overall length of the workpiece carrier 2 and stops in the predetermined fixed position 8. In this stop position 8, the automated transport vehicle 3 disconnects (puts down) and leaves the workpiece-loaded workpiece carrier 2 that has been traveling with it, moves backward by itself, once exits the outward line section 7A and returns up to a fork 45. Then the automated transport vehicle 3 moves toward the homeward line section 7B and enters the homeward line section 7B through the exit 7b-2. The automated transport vehicle 3 moves forward on the homeward line section 7B, and when detecting an empty workpiece carrier 2' first encountered, confirms that what is encountered is an empty workpiece carrier 2' by means of a proximity switch 36 (FIG. 3) provided on the automated transport vehicle 3, then connects with the empty carrier 2' and causes the empty carrier 2' to travel with it back onto the supply-side line 4.

Thus, the automated transport vehicle 3 disposed on the supply-side line 4 is allowed to pass through the entry 7a-1 and move forward on the outward line section 7A of the buffer line 7 up to the fixed position 8, to pass through the exit 7b-2 and move forward on the homeward line section 7B until it first encounters an empty carrier 2', and to travel all the way along the supply-side line 4 to move a workpiece-loaded carrier 2 or an empty carrier 2'.

Meanwhile, the automated transport vehicle 3 which has been causing a workpiece carrier 2' that had been emptied by unloading workpieces in the consumption area 5 to travel with it along the consumption-side line 6 first moves toward the homeward line section 7B. An NS sensor 38 (see FIG. 3) provided on the automated transport vehicle 3 detects a command tape 16 on the route, and a detection signal is sent to the control device 42 (FIG. 1) wirelessly, so that the control device 42 recognizes the entry of the empty carrier 2' from the consumption-side line 6 into the buffer line 7. The automated transport vehicle 3 moves forward, and when a detection signal based on the detection of a command tape 15 at the entry 7b-1 of the homeward line section 7B is sent to the control device 42 (FIG. 1), a feedback signal is returned from the control device 42 to the controller 32 (see FIG. 3) of the automated transport vehicle 3. On receipt of the feedback signal, the automated transport vehicle 3 moves forward a distance equal to the overall length of the empty carrier 2' and stops in the predetermined fixed position 12. In this stop position 12, the automated transport vehicle 3 disconnects (puts down) and leaves the empty carrier 2' that has been traveling with it, moves backward by itself, once exits the homeward line section 7B and returns up to a fork 46. Then the automated transport vehicle 3 moves toward the outward line section 7A and enters the outward line section 7A through the exit 7a-2. The automated transport vehicle 3 moves forward on the outward line section 7A, and when detecting a workpiece carrier 2 first encountered, confirms that what is encountered is a workpiece-loaded workpiece carrier 2 by means of a proximity switch 36 (FIG. 3) provided on the automated transport vehicle 3, then connects with the workpiece-loaded workpiece carrier 2 and causes the workpiece-loaded workpiece carrier 2 to travel with it back onto the consumption-side line 6.

Thus, the automated transport vehicle 3 disposed on the consumption-side line 6 is allowed to pass through the entry 7b-1 and move forward on the homeward line section 7B up to the fixed position 12, to pass through the exit 7a-2 and move forward on the outward line section 7A until it encounters a first workpiece-loaded carrier 2, and to travel all the way along the consumtion-side line 6 to move a workpiece-loaded carrier 2 or an empty carrier 2'.

In the manner described above, the control device 42 shown in FIG. 1 monitors, through mathematical operations, how many workpiece-loaded workpiece carriers 2 and how many empty workpiece carriers 2' are now on the outward line section 7A and the homeward line section 7B of the buffer line 7, respectively, and supervises and controls the entry and exit of workpiece-loaded carriers 2 and empty carriers 2' to and from the buffer line 7.

As a means for this, when passing through the command tapes 9, 16 provided before the entries 7a-1, 7b-1 of the buffer line 7, the automated transport vehicle 3 sends a confirmation request to the control device 42, wirelessly, and if it is confirmed that the carriers on an intended line section amount to 10, for example, (suppose that the capacity of each line section in the present embodiment is 10 carriers), waits at that position until a space becomes available.

Conversely, if no carrier is on an intended line section, control is performed so that the automated transport vehicle 3 waits for a workpiece-loaded carrier 2 or an empty carrier 2' to enter the intended line section.

As described above, the automated transport vehicle 3 disposed to travel on the supply-side line 4 in FIG. 1 exclusively repeats a cyclic movement of causing a workpiece carrier 2 that has been loaded with workpieces in the supply-side area 1 to travel with it up to the fixed position 8 on the outward line section 7A of the buffer line 7, past the entry 7a-1, and on its way home, entering the homeward line section 7B through the exit 7b-2 and bringing a first encountered empty carrier 2' back to the supply-side area 1.

It is to be noted that as shown by arrows in FIG. 1, the workpiece-loaded carrier 2 is caused to travel to the outward line section 7A of the buffer line 7 in the counterclockwise direction m, while the empty carrier 2' caused to travel from the homeward line section 7B of the buffer line 7 back to the supply-side area 1 is moved from a fork 44 on the supply-side line 4 in the counterclockwise direction n. This ensures a smooth and unencumbered cyclic movement.

Likewise, the automated transport vehicle 3 disposed to travel on the consumption-side line 6 exclusively repeats a cyclic movement consisting of the following actions: the automated transport vehicle 3 enters the outward line section 7A through the exit 7a-2, causes a first encountered workpiece-loaded carrier 2 to travel with it, moves from a fork 43 to the consumption area 5, and delivers workpieces required in the consumption area 5 at an appropriate time in an appropriate amount. Then, the automated transport vehicle 3 causes the carrier 2' that has been emptied by unloading the workpieces in the consumption area 5 to travel with it, and when detecting the command tape 16, enters the homeward line section 7B of the buffer line 7 through the entry 7b-1 with the empty carrier 2', moves forward a distance equal to the overall length of the empty carrier 2' and stops in the fixed position 12, according to an instruction from the command tape 16. Then, the automated transport vehicle 3 disconnects (puts down) and leaves the empty carrier 2', exits the homeward line section 7B and returns up to the fork 46. Then the automated transport vehicle 3 moves to the outward line section 7A, enters the outward line section 7A through the exit 7a-2, connects with a first encountered workpiece-loaded workpiece carrier 2, and causes the workpiece-loaded workpiece carrier 2 to travel with it back to the consumption-side area 5.

Since the workpiece transportation system according to the present invention has the structure described above and performs the actions described above, even when changes are made to a factory production line adopting this system, for example, adaptation to the production line change only requires simple work of transferring the automated-transport-vehicle guideway as shown in FIG. 1 and therefore can be carried out easily and quickly. Thus, high usability is provided.

Reference sign 18 in FIG. 2 denotes guard fences provided along both sides of the outward line section 7A and of the homeward line section 7B of the buffer line 7, which are safety fences for preventing a person from entering the line by mistake.

Here, referring to FIGS. 3 to 5, the specific structure of the automated transport vehicle 3 and of the workpiece carrier 2 applicable to the above-described embodiment of the workpiece transportation system will be described briefly.

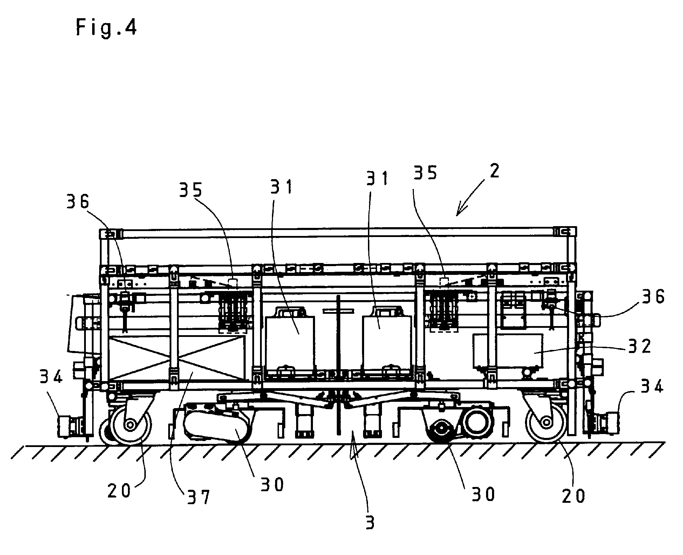

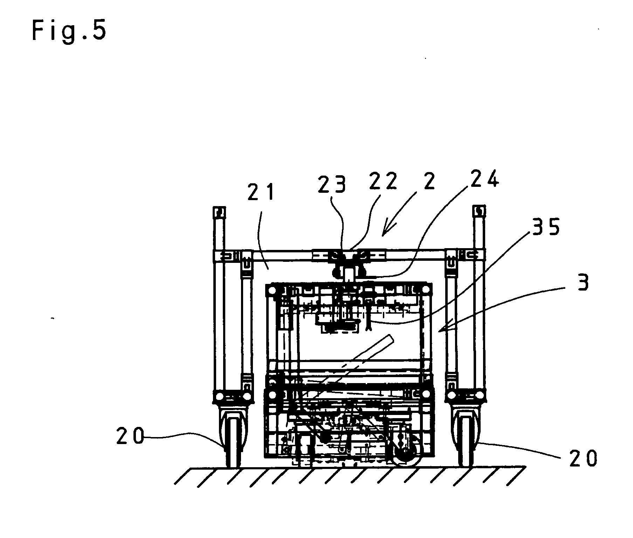

As shown in FIGS. 4 and 5, the workpiece carrier 2 is in the form of a wheeled platform comprising so-called free wheels 20 at four corners and a platform (load-carrying platform) 22 intended for workpieces to be loaded on. The part under the platform 22 forms a gate-like structure allowing front-to-back passage, viewed along the travel direction. More specifically, the gate-like structure defines a transport-vehicle passage space 21 which allows the automated transport vehicle 3 to come under the platform, connect with the workpiece carrier 2 and cause the workpiece carrier 2 to travel with it, and also to pass under the platform after disconnecting the workpiece carrier 2. Reference sign 23 in FIG. 5 denotes a connection member with which the automated transport vehicle 3 connects.

The specific structure of the automated transport vehicle 3 is already presented in Patent Document 2 mentioned above. As shown in FIG. 3, drive wheel devices 30, 30 forming a pair are disposed on the front and back sides, viewed along the travel direction, symmetrically, and storage batteries 31, 31 as power sources for them are installed. Also a controller 32 for the drive wheel devices 30 is installed. Sensors 34, 34 for detecting a guide signal emitted from the guide means constituting the automated-transport-vehicle guideway are provided at the front and back ends of the vehicle body. Connection means 35, 35 are fitted to the top of the vehicle body, on the front and back sides, symmetrically. Each connection means includes an electrically-operated pin that can be stuck out and retracted vertically. When stuck out, the pin connects with the connection member 23 of the workpiece carrier 2, thereby enabling the workpiece carrier 2 to travel with the automated transport vehicle 3, and when retracted, the pin disconnects and separates from the connection member 23. The connection means 35 including the electrically-operated pin is automatically controlled to connect with the connection member 23 of the workpiece carrier 2. Proximity switches 36, 36 are fitted to the top of the vehicle body, on the front and back sides, symmetrically. When the automated transport vehicle 3 enters the automated-transport-vehicle passage space 21 of the workpiece carrier 2 and the proximity switch 36 thereof detects a detection plate 24 (see FIG. 5) indicating the position of the connection member 23 of the workpiece carrier 2, the connection means 35 is controlled so that the electrically-operated pin connects with the connection member 23 of the workpiece carrier 2.

All such actions of the workpiece transportation system are controlled by a control panel 37 installed in the automated transport vehicle 3.

### Embodiment 2

The above-described embodiment 1 is arranged such that workpiece-loaded carriers 2 that have entered the outward line section 7A of the buffer line 7, or empty carriers 2' that have returned to the homeward line section 7B are fed as a series, or in other words, moved forward in a chain state, up to the fixed position 8 or 12 near the exit 7a-2 or 7b-2, so that the automated transport vehicle 3 entering each line section through the exit thereof takes out the carriers through the exit, one after another, in order of encountering.

However, in such series-feed method, the number of carriers that can be fed as a series is limited to the transport capacity of the automated transport vehicle 3. Particularly in the outward line section 7A intended to store workpiece-loaded workpiece carriers 2 which are great in weight, when the workpiece-loaded carriers 2 that have entered amount to 10 or so, it is not rare that the weight of the workpieces prevents the carriers 2 from being fed as a series.

Embodiment 2 is characterized by a feed-specific automated transport vehicle 40 disposed on the outward line section 7A of the buffer line 7, as a means for solving the above problem. It is of course possible to dispose and make operate a feed-specific automated transport vehicle of the same type, also on the homeward line section 7B.

As embodiment 2, the case in which the feed-specific automated transport vehicle 40 has a transport capacity to feed a series of up to 5 workpiece-loaded workpiece carriers 2 at a time will be taken. The structure and function of the feed-specific automated transport vehicle 40 are the same as those of the above-described automated transport vehicle 3.

The feed-specific automated transport vehicle 40 disposed on the outward line section 7A is intended to always return to a fixed position 41 on the outward line section 7A of the buffer line 7 after a movement and wait there. Meanwhile, when a workpiece-loaded carrier 2 caused to travel with an automated transport vehicle 3 enters the outward line section 7A of the buffer line 7 through the entry 7a-1 and is put in the fixed position 8 and then the automated transport vehicle 3 moves backward and passes through the command tape 10, the NS sensor 38 detects it and sends a signal to the control device 42 (FIG. 1). In response, the control device 42 returns a feedback signal to the controller (see reference sign 32 in FIG. 3) of the automated transport vehicle 40, so that the feed-specific automated transport vehicle 40 starts moving toward the workpiece-loaded carrier 2. By means of its proximity switch (see reference sign 36 in FIG. 3), the feed-specific automated transport vehicle 40 recognizes (confirms) that what is encountered is a workpiece-loaded carrier 2, and connects with the workpiece-loaded carrier 2, thereby causing the workpiece-loaded carrier 2 to travel with it. Then, when the NS sensor (reference sign 38 in FIG. 3) of the feed-specific automated transport vehicle 40 detects a home position command tape 11, a signal is sent from the NS sensor to the control device 42 (FIG. 1) wirelessly and the control device 42 returns a feedback signal to the controller (see reference sign 32 in FIG. 3) of the feed-specific automated transport vehicle 40. On the basis of this, an automated transport vehicle 3 coming from the consumption-side line 6 enters the outward line section 7A through the exit 7a-2, recognizes (confirms), by means of its proximity switch 38, that what is placed in the predetermined position 19 is a workpiece-loaded carrier 2, connects with this workpiece-loaded carrier 2, thereby causing the workpiece-loaded carrier 2 to travel with it, exits the outward line section 7A through the exit 7a-2, and moves onto the consumption-side line 6 with the workpiece-loaded carrier 2.

Here, since the carrying-in interval with which workpiece-loaded carriers 2 enter the outward line section 7A from the supply-side line 4 is shorter than the carrying-out interval with which the workpiece-loaded carriers 2 are take out onto the consumption-side line 6 (the time of workpiece loading is shorter than the time of workpiece consumption), the number of workpiece-loaded carriers 2 on the outward line section 7A gradually increases. Thus, the workpiece-loaded carrier 2 moved forward and placed in the predetermined position 19 by the feed-specific automated transport vehicle 40 forces the preceding workpiece-loaded carrier 2 out of the predetermined position 19 forward. Thus, successively entering workpiece-loaded carriers 2 form a longitudinal series, each forcing forward the preceding one.

In this process, when the automated transport vehicle 3 enters the outward line section 7A through the entry 7a-1, puts a workpiece-loaded carrier 2 in the fixed position 8, then moves backward and passes through the command tape 10 at the entry 7a-1, 1 is added to the number of workpiece-loaded carriers 2 that have entered the outward line section 7A. Meanwhile, when the feed-specific automated transport vehicle 40 brings the workpiece-loaded carrier 2 from the fixed position 8 to the predetermined position 19, leaves it there, then moves backward and passes through the home position command tape 11, 1 is subtracted from the number of workpiece-loaded carriers 2 located on the front side (entry side) of the outward line section 7A while 1 is added to the number of workpiece-loaded carriers 2 located on the rear side (exit side) of the outward line section 7A.

Further, when the automated transport vehicle 3 enters the outward line section 7A through the exit 7a-2, causes a first encountered workpiece-loaded carrier 2 to travel with it, exits through the exit 7a-2 with the workpiece-loaded carrier 2 and passes through the command tape 13 at the exit 7a-2, 1 is subtracted from the number of workpiece-loaded carriers 2 located on the rear side (exit side) of the outward line section 7A.

In this manner, the control device 42 (FIG. 1) calculates how many workpiece-loaded carriers 2 are on the front side of the outward line section 7A and how many are on the rear side thereof, thereby confirming that the feed-specific automated transfer vehicle 40 is in the fixed position 41 in which it should wait, that a workpiece-loaded carrier 2 is in the predetermined position 19 on the rear side, etc., so as to perform control on the basis of those facts confirmed. The control device 42 supervises and controls the pattern of actions of the feed-specific automated transport vehicle 40 and the entry and exit of workpiece-loaded carriers 2 and empty carriers 2' to and from the buffer line 7.

It is to be noted that since the empty carrier 2' entering the homeward line section 7B is light, even when each line section is determined to store up to 10 carriers, for example, the drive capacity of the automated transport vehicle 3 which enters through the entry 7b-1 and takes an empty carrier 2' traveling with it to the fixed position 12 is enough to force forward a series of up to 10 empty carriers. Thus, there is no particular need to dispose a feed-specific automated transport vehicle 40 on the homeward line section 7B. Only, the count and control of empty carriers 2' entering and exiting the homeward line section 7B is performed in the same manner as for the outward line section 7A.

When the automated transport vehicle 3 traveling along the supply-side line 4 with a workpiece-loaded carrier 2 passes through the command tape 9 immediately before the entry 7a-1 of the outward line section 7A, the automated transport vehicle 3 sends a confirmation request to the control device 42 wirelessly. When it is confirmed that the feed-specific automated transport vehicle 40 is waiting in the predetermined fixed position 41, the automated transport vehicle 3 moves to the outward line section 7A with the workpiece-loaded carrier 2. When the feed-specific automated transport vehicle 40 is not in the fixed position 41, the automated transport vehicle 3 waits before the entry 7a-1. After receiving the confirmation that the feed-specific automated transport vehicle 40 is waiting in the fixed position 41, the automated transport vehicle 3 starts moving forward.

When the automated transport vehicle 3 enters the outward line section 7A through the entry 7a-1 with the workpiece-loaded carrier 2, puts the workpiece-loaded carrier 2 in the fixed position 8, then moves backward from that position and passes through the command tape 10, the NS sensor 38 of the automated transport vehicle 3 detects it and sends a detection signal. On the basis of this detection signal, the feed-specific automated transport vehicle 40 waiting in the fixed position 41 first sends to the control device 42 (FIG. 1), wirelessly, a request for confirmation of how many workpiece-loaded carriers 2 are on the front side (entry side) of the outward line section 7A and how many workpiece-loaded carriers 2 are waiting on the rear side (exit side), and confirms how many carriers are still acceptable on the rear side, i.e., on and behind the predetermined position 19, and whether the feeding of a further workpiece-loaded carrier 2 to the rear side is necessary or not allowed.

Let us suppose that up to 5 carriers can be accepted on the rear side, i.e., on and behind the predetermined position 19 of the outward line section 7A. If there are 5 carriers now on the rear side, the feeding is not allowed, so that the feed-specific automated transport vehicle 40 does not move. If there are 4, one more carrier is allowed to be fed to the rear side, and if there are 3, 2 more carriers are allowed to be fed. Thus, an instruction to transport such number of workpiece-loaded carriers 2 is given to the feed-specific automated transport vehicle 40, and the feed-specific automated transport vehicle 40 carriers out feeding according to the instruction.

### Embodiment 3

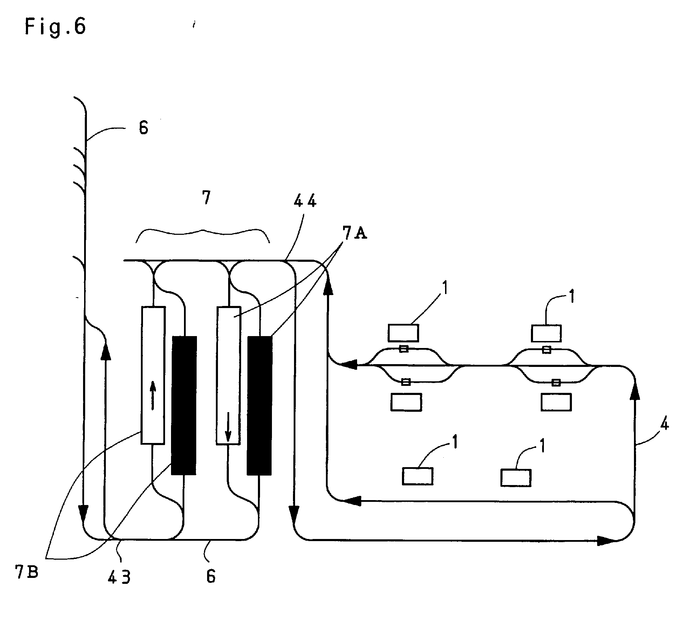

FIG. 6 is a conceptual diagram showing the plane configuration of another example of the workpiece transportation system comprising the automated transport vehicles 3 and the workpiece carriers 2, as embodiment 3 of the present invention.

The characterizing feature of embodiment 3 is that the outward line section 7A as well as the homeward line section 7B of the buffer line 7 consists of two (or more) lines.

It is to be noted that the supply-side line 4 as well as the consumption-side line 6 can be configured as desired, according to the practical requirements. In the example shown in FIG. 6, the consumption-side line 6 has branches corresponding to a plurality of consumption areas.

In the above, the present invention has been described on the basis of the embodiments shown in the drawings. The present invention is, however, not limited to the described embodiments, but should be considered to encompass those design changes, modifications and applications which a person skilled in the art would carry out as necessary, without departing from the sprit and scope of the present invention.

## Claims

1. A workpiece transportation system comprising a plurality of workpiece carriers designed to transport workpieces loaded thereon, automated transport vehicles designed to cause the workpiece carrier to travel with it and put and detach the workpiece carrier in a predetermined position on a route, and a guideway for the automated transport vehicle, said guideway including a supply-side line provided for loading of workpieces onto the workpiece carrier in a supply area and traveling of the workpiece-loaded workpiece carrier, a consumption-side line provided for introduction of the workpiece-loaded workpiece carrier and traveling and sending-out of the workpiece carrier that has been emptied by unloading the workpieces in a consumption area, and a buffer line which continuously connects the supply-side line and the consumption side-line, wherein
the buffer line includes an outward line section onto which workpiece-loaded workpiece carriers come from the supply-side line and form a row, and a homeward line section onto which workpiece carriers that have been emptied by unloading workpieces in the consumption area come from the consumption-side line and form a row, where the outward line section and the homeward line section are almost parallel and the disposition of the entry and exit of the outward line section is opposite to the disposition of the entry and exit of the homeward line section so that the outward line section and the homeward line section form a continuous route connected with the supply-side line and the consumption-side line,
said automated transport vehicles include an automated transport vehicle provided to cause a workpiece carrier that has been loaded with workpieces in the supply area to travel with it along the supply-side line, and when the workpiece-loaded workpiece carrier passes through the entry of the outward line section of the buffer line and moves forward on the outward line section up to a fixed position, leave the workpiece-loaded workpiece carrier in that position, move backward, exit the outward line section, move toward the homeward line section, enter the homeward line section through the exit thereof, and then cause an empty workpiece carrier first encountered on the homeward line section to travel with it back onto the supply-side line, and
an automated transport vehicle provided to cause a workpiece carrier that has been emptied by unloading workpieces in the consumption area to travel with it along the consumption-side line, and when the empty workpiece carrier passes through the entry of the homeward line section of the buffer line and moves forward on the homeward line section up to a fixed position, leave the empty workpiece carrier in that position, move backward, exit the homeward line section, move toward the outward line section, enter the outward line section through the exit thereof, and then cause a workpiece-loaded workpiece carrier first encountered on the outward line section to travel with it back onto the consumption supply-side line, thereby delivering the workpieces for consumption.

2. The workpiece transportation system according to claim 1, wherein
when the workpiece carrier caused by the automated transport vehicle to travel with it passes through the entry of the outward line section or the homeward line section of the buffer line and moves forward a distance equal to the overall length of the workpiece carrier, the automated transport vehicle leaves the workpiece carrier in the position reached, and
when the automated transport vehicle passes through the exit of the outward line section or the homeward line section of the buffer line, moves forward and recognizes an encounter with a first workpiece carrier, the automated transport vehicle connects with said first workpiece carrier and causes said first workpiece carrier to travel with it.

3. The workpiece transportation system according to claim 1 or 2, wherein
a feed-specific automated transport vehicle is provided at least on the outward line section of the buffer line to always return and wait in a fixed position on the outward line section, and under control of a control device, said feed-specific transport vehicle moves forward the workpiece carriers that have entered the outward line section, up to a predetermined position, one workpiece carrier at a time or a series of workpiece carriers within its transport capacity at a time, and causes the workpiece carriers to wait in that position.

4. The workpiece transportation system according to claim 1, 2 or 3, wherein
the workpiece carrier includes, under a platform, a gate-like structure allowing front-to-back passage, viewed along the travel direction, said gate-like structure defines a transport-vehicle passage space which allows the automated transport vehicle to come under the platform, connect with the workpiece carrier and cause the workpiece carrier to travel with it, and also to pass under the platform after disconnecting the workpiece carrier, and the automated transport vehicle has a connection means capable of connecting with a connection member of the worpiece carrier, thereby enabling the workpiece carrier to travel with the automated transport vehicle, and disconnecting the connection member, thereby enabling the automated transport vehicle to leave the workpiece carrier.
